# FASCICULE DE BREVET EUROPEEN

(11) **EP 1 670 271 B1**
(45) Date de publication et mention de la délivrance du brevet: **27.02.2008**
(21) Numéro de dépôt: 05301018.7
(22) Date de dépôt: 07.12.2005
(51) Int. Cl.: H04Q 7/34

(54) **Optimisation de réseau d'accès radio et/ou de réseau de coeur multi-standards en interaction**
Optimierung von Multistandardzugangsnetz und Multistandardvermittlungsnetz, die interagieren
Optimisation of multistandard radio access and/or core network that interact

(30) Priorité: 10.12.2004 FR 0452915
(43) Date de publication de la demande: 14.06.2006
(73) Titulaire: Alcatel Lucent, 75008 Paris (FR)
(72) Inventeur: Labrogere, Paul, 91190, Gif-sur-Yvette (FR); Poussiere, Fabrice, 91300, Massy (FR); Billault, Vincent, 77310, St Fargeau Ponthierry (FR); Bouche, Nicolas, 75016 Paris (FR); Dautun, Gilles, 94430 Chennevieres sur Marne (FR)
(74) Mandataire: Chaffraix, Sylvain

(56) Documents cités:
- US-A1- 2004 014 476
- US-A1- 2004 132 486
- 3RD GENERATION PARTNESHIP PROJECT: "Technical specification group radio access network; Imprivement of RRM across RNS and RNS/BSS (Post Rel-5); (Release 6) 3GPP TR 25.891 v0.3.0"[Online] février 2003 (2003-02), pages 1-17, XP002338247 Extrait de l'Internet: URL:www.3gpp.org> [extrait le 2005-07-27]

## Description

L'invention concerne les réseaux de communication radio, et plus précisément l'optimisation de leurs réseaux d'accès radio et/ou de leurs réseaux de coeur (ou « Core Network ») dans un environnement multi-standards (ou multi-technologies).

US 2004/014476 décrit un système de plannification de réseau pour un réseau cellulaire CDMA, qui permet de calculer des zones de service où un service peut être fourni par le réseau.

Plusieurs standards (ou technologies) différent(e)s de réseaux de communication radio cohabitent actuellement au sein de certaines zones géographiques. C'est notamment le cas de réseaux mobiles (ou cellulaires) dits 2G, comme par exemple les réseaux de type GSM, de réseaux mobiles dits 2,5G, comme par exemple les réseaux de type GPRS/EDGE, de réseaux mobiles dits 3G, comme par exemple les réseaux de type UMTS, et de réseaux locaux sans fil de type WLAN (pour « Wireless Local Access Network »).

Chaque réseau radio, répondant à un standard donné, fait l'objet, une fois implanté dans une zone géographique donnée et une fois configuré, de fréquentes optimisations au moyen d'outils d'optimisation. Ces outils d'optimisation font généralement partie du système de gestion de réseau (ou NMS pour « Network Management System ») et/ou du système de gestion de services (ou OSS pour « Operating and Service System »). Ils utilisent notamment des cartographies de différents types, comme par exemple des cartographies de la couverture radio de leurs cellules (dans le cas de réseaux cellulaires) ou des cartographies de zones géographiques ou encore des cartographies d'adjacences intercellulaires (également dans le cas de réseaux cellulaires).

On entend ici par « cartographie d'adjacences » une carte signalant les cellules d'un réseau mobile répondant à un standard donné, par exemple 2G, qui peuvent interagir avec des cellules voisines d'au moins un autre réseau mobile répondant à un autre standard, par exemple 3G, lors de procédures de transfert de communication intercellulaire (ou « handovers »).

Aujourd'hui, chaque réseau radio fait l'objet d'une optimisation indépendamment des réseaux radio avec lesquels il cohabite, et notamment de leurs propres optimisations, et alors même que les interactions entre réseaux de technologies différentes ne cessent d'augmenter. Chaque nouvelle implantation d'un réseau reposant sur un nouveau standard impose donc la réalisation d'un outil logiciel d'optimisation dédié dont le coût est élevé.

Cette situation résulte du fait que l'on ne tient pas compte des similitudes voire même des points communs qui existent entre des réseaux radio de technologies différentes. Parmi ces similitudes ou identités, on peut notamment citer des cartographies au moins partiellement communes, ou bien des cartographies décrivant des interactions mutuelles, comme par exemple des adjacences de cellules (dans le cas de réseaux cellulaires), ou encore des équipements au moins partiellement communs, notamment au niveau de leurs réseaux d'accès radio et/ou de leurs réseaux de coeur respectifs.

Force est donc de constater qu'il n'existe pas aujourd'hui d'outil d'optimisation générique qui permettrait de faciliter l'intégration de réseaux répondant à de nouveaux standards en présence de réseaux répondant à des standards antérieurs.

Par ailleurs, il n'existe pas non plus d'outil permettant d'optimiser les réseaux répondant à des standards antérieurs compte tenu de l'implantation de nouveaux réseaux répondant à de nouveaux standards.

Il a certes été proposé, par l'organisme de normalisation 3GPP, des interfaces de programmation, de type API (pour « Application Programming Interface »), permettant de limiter la complexité de la gestion conjointe de réseaux répondant à des technologies différentes, mais cela ne permet d'offrir qu'une possibilité de standardisation des systèmes de gestion de services (ou OSS) au travers des requêtes des systèmes de gestion de réseau (ou NMS) et non un cadre de gestion des réseaux d'accès radio et/ou des réseaux de coeur (ou « Core Network ») dans un environnement multi-standards.

L'invention a donc pour but d'améliorer la situation.

Elle propose à cet effet un dispositif d'optimisation des réseaux d'accès radio et/ou réseaux de coeur de réseaux de communication radio répondant à des standards différents, comprenant :
- des moyens de mémorisation pouvant stocker
   - un ensemble primaire de définitions d'informations de cartographies choisies communes à tous les standards, selon un premier format choisi,
   - au moins un ensemble secondaire de définitions d'informations de cartographies choisies communes à des groupes d'au moins deux standards, selon un deuxième format choisi, et
   - des ensembles tertiaires de définitions d'informations de cartographies choisies dédiés chacun à l'un des standards, selon un troisième format choisi,
- des moyens de gestion chargés, lorsqu'ils reçoivent une demande d'optimisation comportant les désignations d'au moins une définition de l'ensemble primaire, et/ou d'au moins une définition d'un ensemble secondaire impliquant au moins des premier et second standards, et/ou d'au moins une définition de l'ensemble tertiaire associé au premier standard, d'extraire des moyens de mémorisation chaque définition désignée en vue de permettre l'optimisation de la partie du réseau répondant au premier standard et concernée par chaque définition de l'ensemble tertiaire extraite, compte tenu des parties de réseau concernées par la définition de l'ensemble primaire extraite et de chaque définition d'ensemble secondaire extraite.

Le dispositif selon l'invention peut comporter d'autres caractéristiques qui peuvent être prises séparément ou en combinaison, et notamment :
- des moyens d'interaction constituant une interface homme/machine et permettant la transmission aux moyens de gestion des demandes d'optimisation ;
- ses moyens de gestion peuvent être chargés de transmettre à des moyens d'affichage les définitions extraites afin qu'elles puissent être affichées de façon su perposée ;
- l'ensemble primaire peut par exemple comporter des définitions d'informations de cartographie indépendantes des réseaux radio, tandis que chaque ensemble secondaire peut par exemple comporter des définitions d'informations de cartographie concernant des éléments radio, de groupes de réseaux radio de standards différents, interagissant ensemble ;
- l'ensemble primaire peut par exemple comporter des définitions d'informations de cartographie choisies parmi des points d'intérêt, des routes, des bâtiments, des zones d'attente et des zones de rassemblement ;
- l'ensemble secondaire peut par exemple comporter des définitions d'informations de cartographie choisies parmi des adjacences entre des éléments de groupes de réseaux radio de standards différents ;
- l'ensemble tertiaire peut par exemple comporter des définitions d'informations de cartographie choisies dans un groupe comprenant au moins des topologies des réseaux radio et des couvertures radio de cellules des réseaux radio ;
- ses moyens de gestion peuvent être chargés, lorsqu'ils reçoivent une demande d'optimisation auxiliaire comportant la désignation de définitions d'au moins deux ensembles tertiaires associés à des premier et second standards mais relatives à des types d'éléments identiques, d'extraire des moyens de mémorisation ces définitions désignées en vue de permettre l'optimisation de la partie du réseau répondant au premier standard et concernée par l'une des définitions d'ensemble tertiaire extraite, compte tenu de la partie du réseau concernée par l'autre définition d'ensemble tertiaire extraite.

L'invention propose également un système de gestion de réseau et/ou un système de gestion de services équipé(s) d'un dispositif d'optimisation du type de celui présenté ci-avant.

L'invention est particulièrement bien adaptée, bien que de façon non exclusive, aux ensembles de réseaux de communication radio mobiles (ou cellulaires), de type GSM, GPRS/EDGE, UMTS et WiFi. Mais, l'invention concerne également tous les autres types de réseaux radio.

D'autres caractéristiques et avantages de l'invention apparaîtront à l'examen de la description détaillée ci-après, et des dessins annexés, sur lesquels :
- la figure 1 illustre de façon très schématique une partie d'un système de gestion de réseau équipée d'un exemple de réalisation d'un dispositif d'optimisation selon l'invention,
- la figure 2 illustre de façon très schématique une représentation en couches des définitions stockées dans les moyens de mémorisation du dispositif d'optimisation de la figure 1.

Les dessins annexés pourront non seulement servir à compléter l'invention, mais aussi contribuer à sa définition, le cas échéant.

L'invention a pour objet de permettre l'optimisation des réseaux d'accès radio et/ou des réseaux de coeur de réseaux de communication radio implantés et cohabitant dans des zones géographiques et répondant à des standards (ou technologies) différent(e)s.

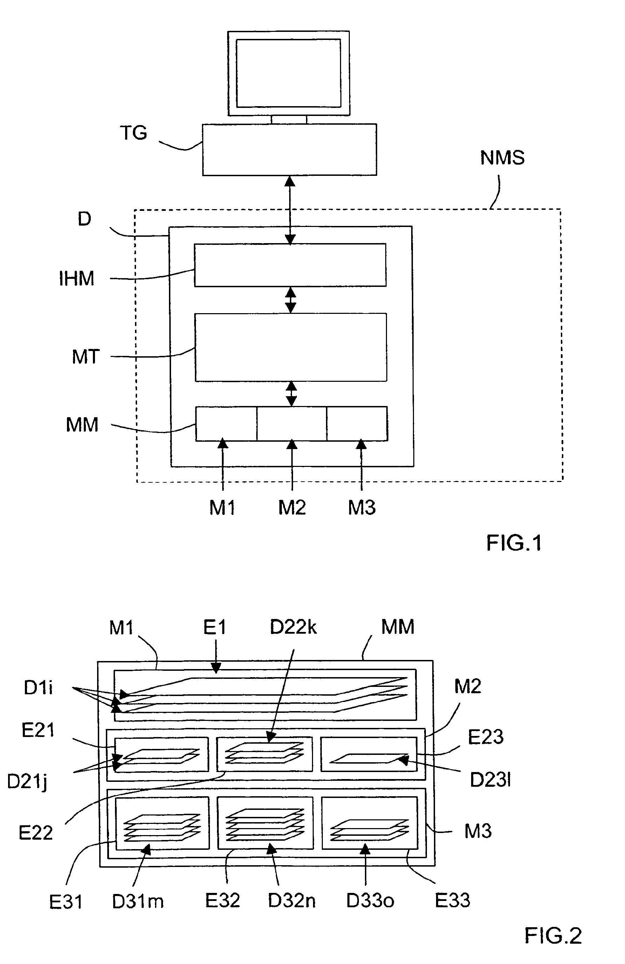

L'invention propose à cet effet un dispositif d'optimisation D du type de celui illustré sur la figure 1. Dans cet exemple, le dispositif d'optimisation D est implanté dans un système de gestion de réseau ou NMS d'un réseau de communication radio. Cette implantation peut être directe ou indirecte. On peut en effet envisager que le dispositif d'optimisation D soit implanté dans un outil d'optimisation, lui-même implanté dans le système de gestion de réseau ou NMS. Le dispositif d'optimisation D pourrait être également externe au système de gestion de réseau ou NMS et couplé à ce dernier. Il pourrait également être implanté dans (ou couplé à) un système de gestion de services (ou OSS) d'un réseau radio soit directement, soit indirectement via un outil d'optimisation.

Le dispositif d'optimisation D selon l'invention comprend au moins des moyens de mémorisation MM couplés à un module de gestion MG.

Les moyens de mémorisation MM peuvent se présenter sous n'importe quelle forme, et notamment sous la forme d'une mémoire ou d'une base de données. Par ailleurs, ils peuvent éventuellement faire partie intégrante du module de gestion MG.

Les moyens de mémorisation MM sont destinés à stocker des définitions d'informations de cartographies de trois types différents et relatives à différents réseaux radio (au moins deux) répondant à des standards différents.

Dans ce qui suit, on considère à titre d'exemple non limitatif que les définitions d'informations de cartographies sont relatives à deux réseaux mobiles (ou cellulaires), par exemple de type GSM (2G) et UMTS (3G), ainsi qu'à un réseau local sans fil, par exemple de type WLAN (pour « Wireless Local Access Network »).

Mais, l'invention n'est limitée à ces types de réseau mobile (ou cellulaire) et de réseau local sans fil. Elle concerne en effet tous les types de réseau de communication radio disposant de réseaux d'accès radio et/ou de réseaux de coeur pouvant cohabiter et interagir au sein d'une zone géographique.

Il est rappelé qu'un réseau mobile peut, d'une façon très schématique, être résumé à un réseau de coeur (ou « Core Network ») couplé à un réseau d'accès radio (appelé UTRAN dans le cas d'un réseau UMTS et BSS dans le cas d'un réseau GSM), tous les deux raccordés à un système de gestion de réseau NMS, ainsi qu'éventuellement à un système de gestion de services (ou OSS). Le réseau d'accès radio comporte des équipements tels que des stations de base (appelées Node Bs dans le cas d'un réseau UMTS et BTSs dans le cas d'un réseau GSM) et des contrôleurs de réseau radio ou noeuds (appelés RNCs dans le cas d'un réseau UMTS et BSCs dans le cas d'un réseau GSM), raccordés entre eux. Chaque station de base contrôle au moins une cellule couvrant une zone radio dans laquelle des terminaux mobiles peuvent établir (ou poursuivre) des liaisons radio.

Par ailleurs, il est rappelé qu'un réseau local sans fil peut, d'une façon très schématique, être résumé à un ou plusieurs points d'accès raccordés à un serveur, lui-même éventuellement raccordé à un routeur périphérique (ou « edge router ») raccordé à un réseau public de téléphonie et/ou un réseau de données (par exemple le réseau Internet).

Les moyens de mémorisation MM sont par exemple, comme dans l'exemple illustré sur les figures 1 et 2, subdivisés en trois sous-parties M1 à M3 chargées chacune de stocker les définitions de l'un des trois types différents.

La première sous-partie M1 est chargée de stocker un ensemble primaire E1 de définitions D1i d'informations de cartographies choisies qui sont communes à tous les standards des (trois) réseaux qui cohabitent. Toutes ses définitions sont stockées selon un premier format choisi.

Dans l'exemple illustré sur la figure 2, l'ensemble primaire E1 comporte trois définitions D1i. Par conséquent, l'indice i est ici compris entre 1 et 3. Mais, il peut prendre n'importe quelle valeur positive et non nulle.

Cet ensemble primaire E1 peut par exemple ne comporter que des définitions D1i de premières informations de cartographie indépendantes des réseaux radio, comme par exemple des informations géographiques.

Les informations de cartographie qui constituent les définitions D1i de l'ensemble primaire E1 peuvent par exemple concerner des points d'intérêt de tout type, comme par exemple des bâtiments administratifs ou des bâtiments historiques ou encore des musées, ou des réseaux de routes et/ou d'autoroutes et/ou de chemins, ou des bâtiments, ou des zones d'attente, comme par exemple des arrêts de bus ou de cars ou des feux de signalisation ou des quais de gare, ou encore des zones de rassemblement, comme par exemple des gares, des aéroports, des hôpitaux, des écoles (y compris maternelles), des centres commerciaux, ou des galeries marchandes.

La deuxième sous-partie M2 est chargée de stocker au moins un ensemble secondaire E2a de définitions D2ab de deuxièmes informations de cartographies choisies qui sont communes à des groupes d'au moins deux des standards des (trois) réseaux qui cohabitent. Toutes ses définitions sont stockées selon un deuxième format choisi.

Dans l'exemple illustré sur la figure 2, la deuxième sous-partie M2 comporte trois ensembles E2a. Par conséquent, l'indice a est ici compris entre 1 et 3. Mais, il peut prendre n'importe quelle valeur positive et non nulle.

Par ailleurs, dans l'exemple illustré sur la figure 2, l'ensemble secondaire E21 comporte deux définitions D21j (b = j = 1 et 2), l'ensemble secondaire E22 comporte trois définitions D22k (b = k = 1 à 3), et l'ensemble secondaire E23 comporte une définition D231 (b = I = 1) .Chaque indice j, k ou I peut prendre n'importe quelle valeur positive et non nulle.

Chaque ensemble secondaire E2a peut par exemple ne comporter que des définitions D2ab de deuxièmes informations de cartographie concernant des éléments radio de groupes d'au moins deux réseaux radio de standards différents qui cohabitent et interagissent ensemble.

Les informations de cartographie qui constituent les définitions D2ab d'un ensemble secondaire E2a peuvent par exemple concerner des adjacences (ou « adjacencies ») entre des éléments radio appartenant à des réseaux d'accès radio de réseaux radio de standards différents. Par exemple, certains éléments radio sont des cellules (ou les stations de base qui les contrôlent) ou bien des points d'accès.

Une cartographie d'adjacences peut par exemple fournir les emplacements des cellules voisines radio (ou de points d'accès voisins), de réseaux radio de standards différents, qui peuvent interagir entre elles lors de procédures de transfert de communication intercellulaire (ou « handover »). Il est par exemple bien connu que des cellules d'un réseau GSM (2G) peuvent interagir avec des cellules d'un réseau UMTS (3G) pendant des handovers de type « dur » (ou « hard handovers »).

La troisième sous-partie M3 est chargée de stocker des ensembles tertiaires E3c de définitions D3cd d'informations de cartographies choisies, dédiés chacun à l'un des standards des (trois) réseaux qui cohabitent. Toutes ses définitions sont stockées selon un troisième format choisi.

Dans l'exemple illustré sur la figure 2, la troisième sous-partie M3 comporte trois ensembles E3c, associés respectivement aux trois réseaux qui cohabitent. Par conséquent, l'indice c est ici compris entre 1 et 3. Mais, il peut prendre n'importe quelle valeur supérieure ou égale à deux (2).

Par ailleurs, dans l'exemple illustré sur la figure 2, l'ensemble tertiaire E31 comporte quatre définitions D31 m (d = m = 1 à 4), l'ensemble tertiaire E32 comporte cinq définitions D32n (d = n = 1 à 5), et l'ensemble tertiaire E33 comporte trois définitions D33o (d = o = 1 à 3) .Chaque indice m, n ou o peut prendre n'importe quelle valeur positive et non nulle.

Chaque ensemble tertiaire E3c ne comporte que des définitions D3cd d'informations de cartographie spécifiques à un réseau d'un standard donné.

Les informations de cartographie qui constituent les définitions D3cd d'un ensemble tertiaire E3c peuvent par exemple concerner la topologie d'un réseau radio ou les couvertures radio de certaines au moins des cellules (ou des points d'accès) du réseau d'accès radio de ce réseau radio.

Comme cela est illustré sur la figure 2, les définitions de chaque ensemble stocké dans une sous-partie de mémorisation M1 à M3 peuvent être considérées comme des couches de données d'information empilées (« verticalement ») les unes au-dessus des autres. Par ailleurs, les ensembles stockés dans des sous-parties de mémorisation différentes peuvent être considérées comme empilées (« verticalement ») les uns au-dessus des autres. En outre, au sein d'une même sous-partie de mémorisation les différents ensembles peuvent être considérés comme placés (« horizontalement ») les uns à côté des autres. Cette représentation en couches n'est ici destinée qu'à faciliter la compréhension de l'invention. Elle n'est pas nécessairement représentative de la façon dont sont stockées les données d'information dans les moyens de mémorisation MM.

Les premier, deuxième et troisième formats selon lesquels sont stockées les définitions des différents ensembles peuvent être différents les uns des autres. Mais, ils peuvent également être identiques entre eux.

Le module de gestion MG, qui est couplé aux moyens de mémorisation MM, est tout d'abord chargé de recevoir des demandes d'optimisation en provenance du système de gestion de réseau NMS (ou de l'OSS) ou, comme illustré, d'un terminal de gestion TG faisant éventuellement partie du NMS (ou de l'OSS).

On entend ici par « demande d'optimisation » un message contenant les désignations d'au moins une définition D1i de l'ensemble primaire E1, et/ou d'au moins une définition D2ab d'un ensemble secondaire E2a impliquant au moins des premier et second standards, et/ou d'au moins une définition D3cd de l'ensemble tertiaire E3c associé au premier standard, et requérant la communication des données de ces définitions désignées.

Les expressions « et/ou » sont ici utilisées pour signaler que certains ensembles primaires, secondaires ou tertiaires peuvent, dans certaines circonstances, être vides, selon le sens mathématique du terme. Plus précisément, il est par exemple équivalent de dire que deux standards, désignés dans une demande d'optimisation, présentent une intersection vide (et donc que l'ensemble secondaire correspondant est vide), et de dire qu'une demande d'optimisation ne comporte pas de désignation d'ensemble secondaire.

Par exemple, une demande d'optimisation se présente sous la forme d'un descripteur agencé selon un format choisi. Un tel descripteur peut par exemple être de type XML (pour « eXtended Markup Language »). Il est dans ce cas constitué d'une arborescence d'éléments ayant des attributs et des valeurs. Un exemple de demande d'optimisation se présentant sous la forme d'un descripteur est donné ci-dessous (la couche générale correspond à l'ensemble E1, les couches communes correspondent aux ensembles E2a, et les couches spécifiques correspondent aux ensembles E3c).
<Couche générale>
<nom de la couche de densité de population = population.ipg>
<\Couche générale>
<Couches communes>
<nom de la couche d'adjacence = StdXToStdYadja.mif>
<nom de la couche d'adjacence = StdXToStdZadja.mif>
<\Couches communes>
<Couches spécifiques>
<nom de la couche de qualité de service (ou QoS) = StdXQoS.mif>
<\Couches spécifiques>

Un message d'optimisation désigne donc i) une ou plusieurs définitions (ou couches) spécifiques d'un réseau radio à optimiser, ii) une ou plusieurs définitions (ou couches) communes au réseau radio à optimiser et à un ou plusieurs autres réseaux radio et censées être concernées par les définitions spécifiques, et iii) une partie au moins d'un espace géographique commun aux réseaux radio qui cohabitent.

Une fois que le module de gestion MG a reçu une demande d'optimisation contenant des désignations de définitions (ou couches), il accède aux moyens de mémorisation MM afin d'extraire les définitions désignées.

Puis, le module de gestion MG transmet les définitions extraites à l'équipement qui a généré la demande d'optimisation (ici le terminal de gestion TG) ou à tout autre équipement dont l'adresse est spécifiée dans la demande d'optimisation.

A réception des définitions extraites, le responsable du terminal de gestion TG peut par exemple les afficher sur son écran afin de procéder à l'optimisation de la partie du réseau qui répond au premier standard et qui est concernée par chaque définition E3cd de l'ensemble tertiaire E3c extraite, compte tenu des parties de réseau qui sont concernées par la définition D1i de l'ensemble primaire E1 extraite et de chaque définition D2ab d'ensemble secondaire E2a extraite.

L'affichage peut par exemple se faire par superposition des définitions extraites.

L'invention permet ainsi de regrouper (de façon « verticale ») des informations sur des réseaux radio de nature à permettre l'optimisation d'une partie au moins d'un réseau d'accès radio et/ou d'un réseau de coeur interagissant avec d'autres réseaux radio.

Le module de gestion MG peut également permettre le regroupement (de façon « horizontale ») d'informations choisies sur des réseaux radio répondant à des standards différents.

Plus précisément, le module de gestion MG peut être chargé, chaque fois qu'il reçoit une demande d'optimisation auxiliaire comportant la désignation de définitions d'au moins deux ensembles tertiaires E3c (par exemple c=1) et E3c' (par exemple c'=3) associés à des premier et second standards mais relatives à des types d'éléments identiques ou équivalentes (par exemple des cellules), d'extraire des moyens de mémorisation MM les définitions désignées afin de les communiquer au terminal de gestion TG (par exemple).

Il est ainsi possible d'optimiser la partie du réseau qui répond au premier standard et qui est concernée par l'une des définitions (par exemple D312) extraite, compte tenu de la partie du réseau concernée par l'autre définition (par exemple D332) extraite.

Comme cela est illustré sur la figure 1, le dispositif d'optimisation D selon l'invention peut également comporter des moyens d'interaction IHM agencés sous la forme d'une interface homme/machine afin de permettre la transmission à son module de gestion MG et l'éventuelle constitution de chaque demande d'optimisation.

Le dispositif d'optimisation D selon l'invention, et notamment son module de gestion MG, ses moyens de mémorisation MM et son éventuelle interface homme/machine IHM, peuvent être réalisés sous la forme de circuits électroniques, de modules logiciels (ou informatiques), ou d'une combinaison de circuits et de logiciels.

Grâce à l'invention, on dispose d'un outil d'optimisation générique facilitant l'optimisation permanente des réseaux d'accès radio et/ou des réseaux de coeur implantés dans un environnement multi-standards, mais également l'intégration de réseaux répondant à de nouveaux standards (sans effort de codage) ainsi que de nouvelles définitions d'interaction entre réseaux répondant à des standards différents.

L'invention ne se limite pas aux modes de réalisation de dispositif d'optimisation, de système de gestion de réseau (NMS) et de système de gestion de services (OSS) décrits ci-avant, seulement à titre d'exemple, mais elle englobe toutes les variantes que pourra envisager l'homme de l'art dans le cadre des revendications ci-après.

Dans la description qui précède on a principalement décrit l'exemple d'une optimisation de réseaux d'accès radio implantés dans un environnement multi-standards. Mais, d'une manière générale l'invention s'applique à l'optimisation de réseaux d'accès radio et/ou de réseaux de coeur implantés dans un environnement multi-standards.

## Revendications

1. Dispositif d'optimisation de réseaux d'accès radio et/ou de réseaux de coeur de réseaux de communication radio répondant à des standards différents comprenant, i) des moyens de mémorisation (MM) propres à stocker, d'une première part, un ensemble primaire de définitions d'informations de cartographies choisies communes à tous lesdits standards, selon un premier format choisi, d'une deuxième part, au moins un ensemble secondaire de définitions d'informations de cartographies choisies communes à des groupes d'au moins deux desdits standards, selon un deuxième format choisi, et d'une troisième part, des ensembles tertiaires de définitions d'informations de cartographies choisies dédiés chacun à l'un desdits standards, selon un troisième format choisi, et ii) des moyens de gestion (MG) agencés, en cas de réception d'une demande d'optimisation comportant les désignations d'au moins une définition dudit ensemble primaire, et/ou d'au moins une définition d'un ensemble secondaire impliquant au moins des premier et second standards, et/ou d'au moins une définition de l'ensemble tertiaire associé audit premier standard, pour extraire desdits moyens de mémorisation (MM) lesdites définitions désignées en vue de permettre l'optimisation de la partie du réseau répondant audit premier standard et concernée par chaque définition de l'ensemble tertiaire extraite, compte tenu des parties de réseau concernées par la définition dudit ensemble primaire extraite et de chaque définition d'ensemble secondaire extraite.

2. Dispositif selon la revendication 1, comprenant des moyens d'interaction (IHM) constituant une interface homme/machine et agencés de manière à permettre la transmission auxdits moyens de gestion (MG) des demandes d'optimisation.

3. Dispositif selon l'une des revendications 1 et 2, dans lequel lesdits moyens de gestion (MG) sont agencés pour transmettre à des moyens d'affichage lesdites définitions extraites de sorte qu'elles puissent être affichées de façon superposée.

4. Dispositif selon l'une des revendications 1 à 3, **caractérisé en ce que** ledit ensemble primaire comporte des définitions d'informations de cartographie indépendantes desdits réseaux radio, et chaque ensemble secondaire comporte des définitions d'informations de cartographie concernant des éléments radio, de groupes de réseaux radio de standards différents, interagissant ensemble.

5. Dispositif selon l'une des revendications 1 à 4, dans lequel ledit ensemble primaire comporte des définitions d'informations de cartographie choisies dans un groupe comprenant au moins des points d'intérêt, des routes, des bâtiments, des zones d' attente, et des zones de rassemblement.

6. Dispositif selon l'une des revendications 1 à 5, dans lequel ledit ensemble secondaire comporte des définitions d'informations de cartographie choisies dans un groupe comprenant au moins des adjacences entre des éléments de groupes de réseaux radio de standards différents.

7. Dispositif selon l'une des revendications 1 à 6, dans lequel ledit ensemble tertiaire comporte des définitions d'informations de cartographie choisies dans un groupe comprenant au moins des topologies desdits réseaux radio et des couvertures radio de cellules desdits réseaux radio.

8. Dispositif selon l'une des revendications 1 à 7, dans lequel lesdits moyens de gestion (MG) sont agencés, en cas de réception d'une demande d'optimisation auxiliaire comportant une désignation de définitions d'au moins deux ensembles tertiaires associés à des premier et second standards mais relatives à des types d'éléments identiques, pour extraire desdits moyens de mémorisation (MM) lesdites définitions désignées en vue de permettre l'optimisation de la partie du réseau répondant audit premier standard et concernée par l'une desdites définitions d'ensemble tertiaire extraite, compte tenu de la partie du réseau concernée par l'autre définition d'ensemble tertiaire extraite.

9. Système de gestion de réseau (NMS) pour un réseau de communication radio, comprenant un dispositif d'optimisation (D) selon l'une des revendications précédentes.

10. Système de gestion de services (OSS) pour un réseau de communication radio, comprenant un dispositif d'optimisation (D) selon l'une des revendications 1 à 8.

## Claims

1. Device for optimisation of radio access networks and/or core networks of radio communication networks conforming to different standards, comprising i) memory means (MM) adapted to store, firstly, a primary set of chosen mapping information definitions common to all said standards, according to a chosen first format, secondly, at least one secondary set of chosen mapping information definitions common to groups of at least two of said standards, according to a chosen second format, and, thirdly, tertiary sets of chosen mapping information definitions each dedicated to one of said standards, according to a chosen third format, and ii) management means (MG) adapted, in case of reception of an optimisation request including designations of at least one definition from said primary set and/or at least one definition from a secondary set implying at least first and second standards, and/or at least one definition from the tertiary set associated with said first standard, to extract from said memory means (MM) said designated definitions with a view to optimisation of the portion of the network conforming to said first standard and that each definition from the extracted tertiary set concerns, given the network portions that the definition from said extracted primary set concerns and each definition from the extracted secondary set concerns.

2. Device according to claim 1, comprising interaction means (IHM) constituting a man/machine interface and adapted to transmit optimisation requests to said management means (MG).

3. Device according to either of claims 1 and 2, wherein said management means (MG) are adapted to transmit said extracted definitions to display means so that they can be displayed superposed.

4. Device according to any one of claims 1 to 3, **characterised in that** said primary set includes mapping information definitions independent of said radio networks and each secondary set includes mapping information definitions concerning radio elements, groups of radio networks using different standards, interacting together.

5. Device according to any one of claims 1 to 4, wherein said primary set includes mapping information definitions chosen in a group comprising at least points of interest, roads, buildings, waiting areas and collective areas.

6. Device according to any one of claims 1 to 5, wherein said secondary set includes mapping information definitions chosen in a group comprising at least adjacencies between elements of groups of radio networks using different standards.

7. Device according to any one of claims 1 to 6, wherein said tertiary set includes mapping information definitions chosen in a group comprising at least topologies of said radio networks and radio coverages of cells of said radio networks.

8. Device according to any one of claims 1 to 7, wherein said management means (MG) are adapted, in case of reception of an auxiliary optimisation request including a designation of definitions from at least two tertiary sets associated with first and second standards but relating to identical element types, to extract said designated definitions from said memory means (MM) with a view to optimising the portion of the network conforming to said first standard and that one of said extracted tertiary set definitions concerns, given the portion of the network that the other extracted tertiary set definition concerns.

9. Network management system (NMS) for a radio communication network, comprising an optimisation device (D) according to any one of the preceding claims.

10. Operating and service system (OSS) for a radio communication system, comprising an optimisation device (D) according to any one of claims 1 to 8.

## Patentansprüche

1. Vorrichtung zur Optimierung der Zugangsnetze und/oder Vermittlungsnetze von Funkkommunikationsnetzen, die unterschiedlichen Standards entsprechen, beinhaltend i) Mittel zur Speicherung (MM), die erstens einen primären Komplex aus Informationsdefinitionen von gewählten Kartographien, die allen Standards gemeinsam sind, gemäß einem ersten gewählten Format, zweitens mindestens einen sekundären Komplex aus Informationsdefinitionen von gewählten Kartographien, die Gruppen von mindestens zwei dieser Standards gemeinsam sind, gemäß einem zweiten gewählten Format, und drittens tertiäre Komplexe aus Informationsdefinitionen von gewählten Kartographien, jeweils für einen dieser Standards dediziert, gemäß einem dritten gewählten Format abspeichern können, und ii) Mittel zur Verwaltung (MG), die so aufgebaut sind, dass sie wenn sie eine Optimierungsanforderung empfangen, die die Bezeichnungen von mindestens einer Definition aus diesem primären Komplex, und/oder mindestens einer Definition aus einem sekundären Komplex, der mindestens ersten und zweiten Standard impliziert, und/oder von mindestens einer Definition aus dem tertiären Komplex, der mit diesem ersten Standard verknüpft ist, enthält, aus diesen Mitteln zur Speicherung (MM) diese bezeichneten Definitionen herausziehen, um die Optimierung des Teils des Netzes zu ermöglichen, der diesem ersten Standard entspricht und von jeder Definition betroffen ist, die aus dem tertiären Komplex herausgezogen wurde, unter Berücksichtigung der Netzteile, die von der Definition betroffen sind, die aus diesem primären Komplex herausgezogen wurde und von jeder Definition, die aus dem sekundären Komplex herausgezogen wurde.

2. Vorrichtung gemäß Anspruch 1 beinhaltend Mittel zur Interaktion (IHM), die eine Schnittstelle Mensch/Maschine bilden und so aufgebaut sind, dass sie die Übermittlung der Optimierungsanforderungen an diese Mittel zur Verwaltung (MG) ermöglichen.

3. Vorrichtung gemäß Anspruch 1 oder 2, bei der diese Mittel zur Verwaltung (MG) so aufgebaut sind, dass sie diese herausgezogenen Definitionen an Mittel zum Anzeigen übertragen, damit sie überlagert angezeigt werden können.

4. Vorrichtung gemäß einem der Ansprüche 1 bis 3, **dadurch gekennzeichnet, dass** dieser primäre Komplex Kartographie-Informationsdefinitionen einschließt, die von diesen Funknetzen unabhängig sind, und jeder sekundäre Komplex Kartographie-Informationsdefinitionen betreffend Funkelemente, Gruppen von Funknetzen mit unterschiedlichem Standard, die zusammen interagieren, enthält.

5. Vorrichtung gemäß einem der Ansprüche 1 bis 4, bei der dieser primäre Komplex Kartographie-Informationsdefinitionen einschließt, die gewählt werden aus einer Gruppe, die mindestens Punkte, die von Interesse sind, Straßen, Gebäude, Warte- und Versammlungsbereiche einschließt.

6. Vorrichtung gemäß einem der Ansprüche 1 bis 5, bei der dieser sekundäre Komplex Kartographie-Informationsdefinitionen enthält, die gewählt werden aus einer Gruppe, die zumindest Adjazenzen zwischen Elementen von Funknetzgruppen mit unterschiedlichem Standard einschließt.

7. Vorrichtung gemäß einem der Ansprüche 1 bis 6, bei der dieser tertiäre Komplex Kartographie-Informationsdefinitionen enthält, die gewählt werden aus einer Gruppe, die zumindest Topologien dieser Funknetze und der Funkversorgung von Zellen dieser Funknetze enthält.

8. Vorrichtung gemäß einem der Ansprüche 1 bis 7, bei der diese Mittel zur Verwaltung (MG) so aufgebaut sind, dass sie, wenn sie eine Hilfsanforderung zur Optimierung empfangen, die eine Bezeichnung von Definitionen von mindestens zwei tertiären Komplexen enthält, welche mit erstem und zweitem Standard verknüpft sind, sich jedoch auf identische Elementarten beziehen, diese bezeichneten Definitionen aus diesen Mitteln zur Speicherung (MM) herausziehen, um die Optimierung des Teils des Netzes zu ermöglichen, der diesem ersten Standard entspricht und von einer dieser herausgezogenen Definitionen aus dem tertiären Komplex betroffen ist, unter Berücksichtigung des Teils des Netzes, der von der anderen herausgezogenen Definition aus dem tertiären Komplex betroffen ist.

9. System zur Netzwerkverwaltung (NMS) für ein Funkkommunikationsnetz mit einer Vorrichtung zur Optimierung (D) gemäß einem der vorstehenden Ansprüche.

10. System zur Verwaltung von Diensten (OS S) für ein Funkkommunikationsnetz mit einer Vorrichtung zur Optimierung (D) gemäß einem der Ansprüche 1 bis 8.
